(19) **Europäisches Patentamt / European Patent Office / Office européen des brevets**

(11) **EP 1 772 648 A1**

(12) # EUROPEAN PATENT APPLICATION

(43) Date of publication:
**11.04.2007 Bulletin 2007/15**

(51) Int Cl.:
**F16H 37/12** *(2006.01)*  **F16H 25/22** *(2006.01)*

(21) Application number: **05447226.1**

(22) Date of filing: **07.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **VRIJE UNIVERSITEIT BRUSSEL**
**1050 Brussel (BE)**

(72) Inventor: **Kool, Patrick**
**1730 Asse (BE)**

(74) Representative: **Van Malderen, Joëlle et al**
**pronovem - Office Van Malderen**
**Avenue Josse Goffin 158**
**1082 Bruxelles (BE)**

(54) **Apparatus comprising a body of a helicoid shape rolling on a body having a hyperboloid shape**

(57)    The present invention is related to an apparatus, comprising a first body with a ruled surface being a helicoid, and a second body with a ruled surface being a hyperboloid, characterized in that the hyperboloid is arranged to roll over the helicoid essentially without longitudinal nor lateral slip. The invention is related in particular to apparatuses of this kind, arranged for transforming a linear into a rotational movement or vice versa.

FIG.6a

EP 1 772 648 A1

## Description

## Field of the Invention

The present invention is related to apparatuses comprising parts which are in rolling contact with each other, in particular to apparatuses for transforming a linear to a rotary movement.

## State of the Art

Rolling contact devices such as bearings or rotary-linear transmissions, employ bodies with an outer shape adapted to roll on a given surface. A typical type of rolling contact takes place between so-called 'ruled surfaces', i.e. surfaces which are obtained by rotating a line around an axis. In roller bearings for example, cylindrical rolls remain in rolling contact on a cylindrical surface, whereby the contact between the two bodies takes place along a line. So far, rolling contact without longitudinal and/or lateral slip is only possible between two cylinders or two cones. On more complex surfaces, e.g. a cylinder rolling on a helicoid, slip does occur, leading to friction which limits the power transmission.

Document US4282764 describes a rotary to linear actuator, wherein a shaft is machined with helical flats or grooves. The object set into motion by rotating the shaft slides over the surface of the grooves.

In 'Geometry design of roller gear cams with hyperboloid rollers', Hong-Sen Yan et al, Mathl. Comput. Modelling, vol. 22, n°8, pp.107-117, 1995, a study is presented of roller gear cams with hyperboloid rollers as meshing elements, which roll on a so-called 'globoidal cam'. The rolling contact is however not without longitudinal nor lateral slip.

## Aims of the Invention

The present invention aims to provide an apparatus comprising a rolling body with a hyperboloid surface, and a body with a helicoid surface, wherein the hyperboloid is capable of rolling without slip on the helicoid.

## Summary of the Invention

The invention is related to an apparatus according to the appended claims.

## Brief Description of the Drawings

Fig. 1 illustrates the parameters defining a hyperboloid surface.

Fig. 2 illustrates a symmetrical hyperboloid of finite size.

Fig. 3 illustrates a truncated hyperboloid.

Fig. 4 illustrates the parameters defining a helicoid surface.

Fig. 5 shows an example of a truncated hyperboloid 20 rolling on a helicoid 21.

Fig. 6a and 6b show two apparatuses for the transformation of a linear to a rotational movement, involving a hyperboloid and helicoid according to the invention.

Fig. 7 illustrates the use of artificial muscles to actuate an apparatus according to the invention

## Detailed Description of the Invention

The invention is related to an apparatus, for example for transforming a rotary to a linear movement or vice versa, said apparatus comprising a combination of a first body and a second body, both bodies having a ruled outer surface, arranged so that the surface of the first body is able to roll essentially without slipping over the surface of the second body, wherein the ruled surface of the first body is a hyperboloid and the ruled surface of the second body is a helicoid.

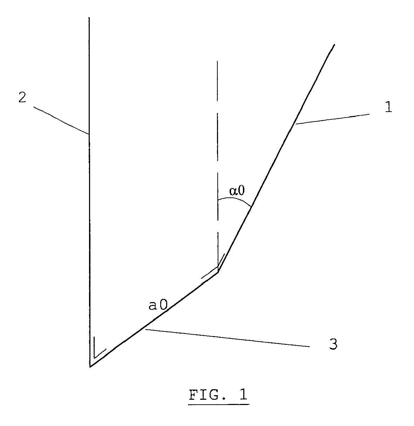

Figure 1 illustrates the parameters that define the hyperboloid surface. This surface is obtained by rotating a skew line 1 around an axis 2. The resulting hyperboloid is defined by the following parameters :

- the distance $a_0$ along the binormal 3 (i.e. the line perpendicular both to the axis and to the skew line), and

- the inclination angle $\alpha_0$ of the skew line with respect to the axis' direction.

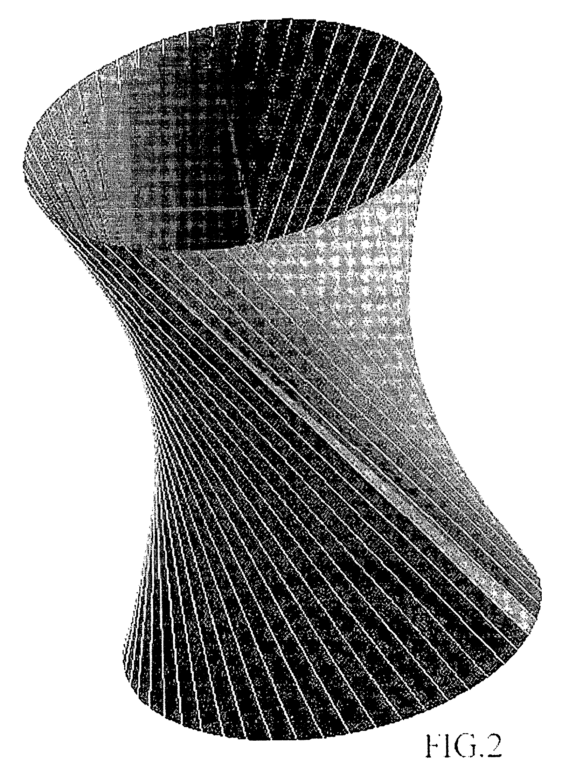

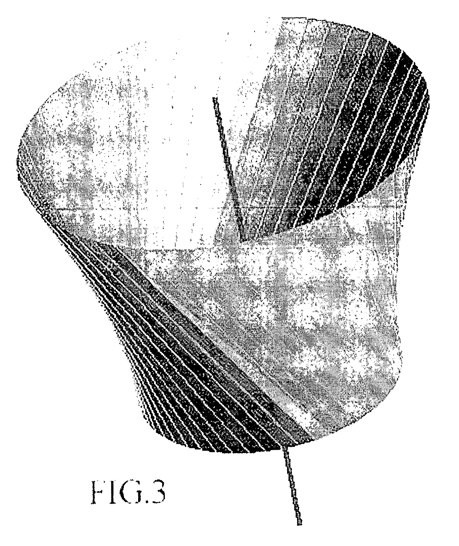

If the skew line extends on both sides of the binormal, the surface obtained is a hyperboloid of finite size, as shown in figure 2, wherein the radius of the circular throat section of the hyperboloid is equal to $a_0$. If the skew line is only to one side of the binormal, one obtains a truncated hyperboloid, as shown in figure 3.

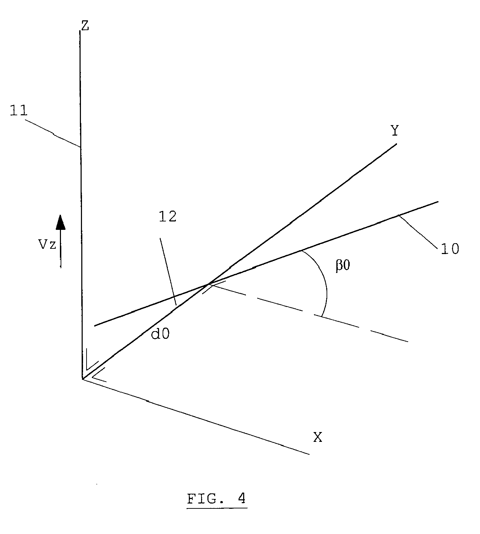

The ruled surface of the second body is a helicoid, which is obtained by rotating a skew line 10 around an axis 11, and at the same time giving the skew line an axial translation along the axis, see figure 4. In figure 4, the rotation axis is drawn as the Z-axis of an orthogonal XYZ coordinate system. The helicoid will be defined by the following parameters :

- the distance do, measured along the binormal 12 (the Y-axis in this case), between the rotation axis 11 and the skew line 10,

- the angle $\beta_0$, between the skew line 10 and the XY-plane,

- the precession angular velocity $\Omega_p$ (in radians per second), of the skew line, with respect to the axis 11,

- the translation velocity $V_z$ (in meter per second) of the skew line with respect to the axis 11,

The two last parameters define the pitch h of the helicoid :

$$ h = V_z / \Omega_p $$

According to the invention, a hyperboloid can roll on the helicoid without longitudinal slip, if the following condition is met :

$$ \frac{a_0}{\sqrt{h^2 + d_0^2}} = \frac{\sin \alpha_0}{\cos \beta_0} $$

Further according to the invention, the hyperboloid can roll without longitudinal and without lateral slip, if the following conditions are met :

$$ \frac{a_0}{h} = \frac{\sin \alpha_0}{\cos \beta_0} \sqrt{1 + \frac{d_0^2}{h^2}} = \frac{\sin \alpha_0}{\cos^2 \beta_0} $$

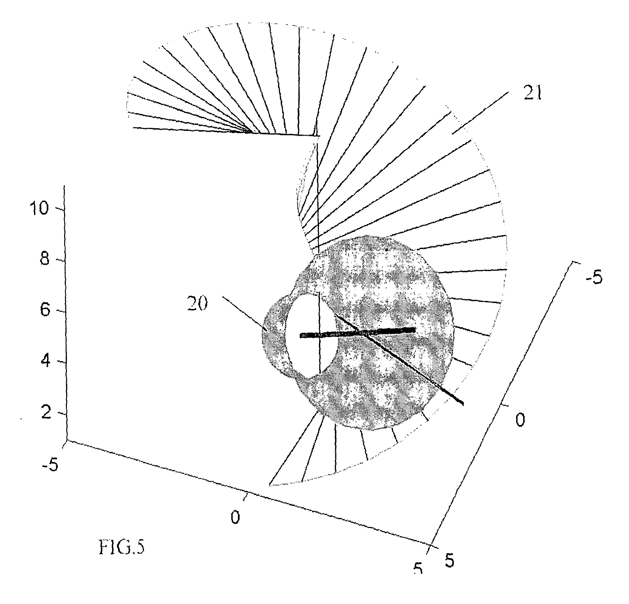

Figure 5 shows an example of a truncated hyperboloid 20 rolling on a stationary helicoid 21.

## Description of preferred embodiments.

Though not limited to a particular apparatus, the invention is related to a number of apparatuses, wherein a linear motion is transformed into a rotation or vice versa, through the interaction without longitudinal or lateral slip, of a hyperboloid and a helocoid.

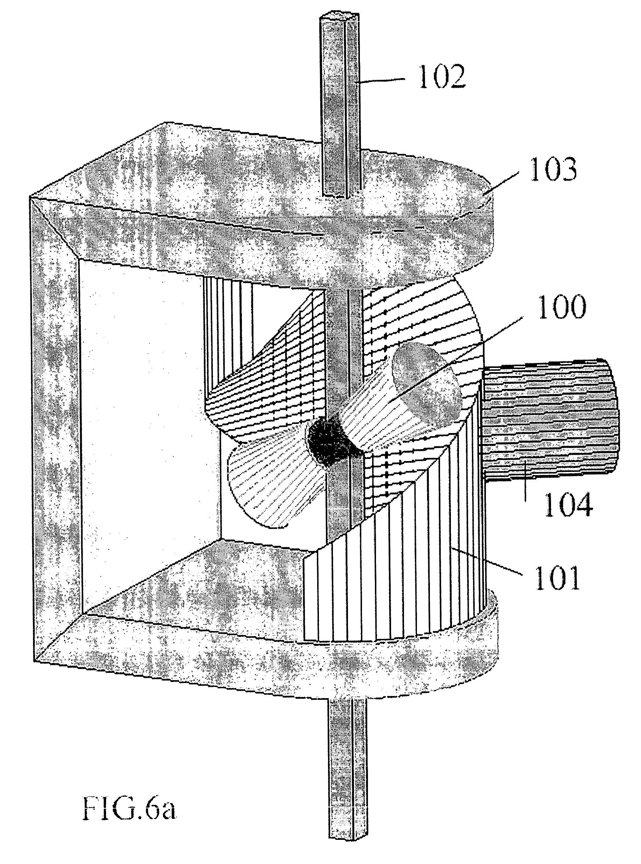

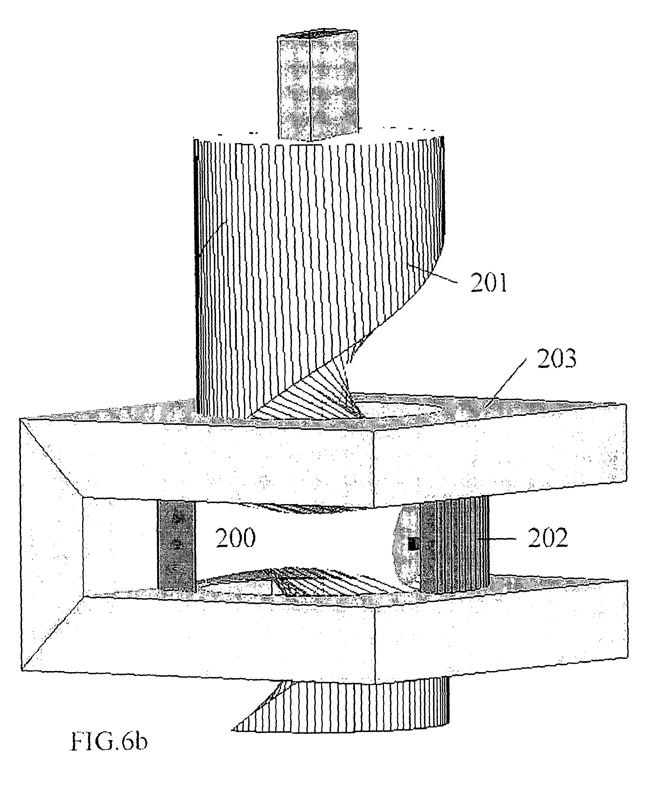

Figure 6a and 6b illustrate the basic components of these apparatuses. A number of different embodiments can be defined, depending on the freedom of movement of the components shown. Each embodiment will be defined by means for actuating the movement of a component and/or means for restricting the movement of other components. These means are not always shown on the drawings, but will be clear to the person skilled in the art. In any embodiment, the hyperboloid is able to rotate around its own axis.

Fig. 6a shows an apparatus comprising a body 100 (hereafter called 'hyperboloid') with a hyperboloid surface, arranged to interact with a body 101 (hereafter called 'helicoid'), with a helicoid surface. The hyperboloid and helicoid surfaces are according to the invention, i.e. they allow a mutual interaction without longitudinal or lateral slip. The hyperboloid 100 is connected to a carrying device, in this case a rod 102 in such a way that the axis of the hyperboloid remains at a fixed angle with respect to the rod 102, while the hyperboloid is able to rotate around its own axis. The helicoid may rotate around its own longitudinal axis, coinciding with the rod 102, but it is obstructed from making a translational movement in the direction of the rod, by the U-shaped bracket 103. The apparatus is shown in an orthogonal XYZ-axis system, with the rod 102 coinciding with the Z-axis.

**Embodiment 1** is based on fig. 6a : By this apparatus, the translation of the hyperboloid 100 is converted into a precession angular rotation of the helicoid 101. The apparatus further comprises a means for actuating the linear movement of the rod along the Z-axis, without rotation of the rod.
The helicoid will rotate around its axis with the precession angular velocity while held from translation, when the rod 102 is actuated to move along the Z-axis. The axial force along the Z-axis is thus converted in a torque on the helicoid around its axis. An extension 104 can be placed on the outside of the helicoid, so that the rotation of this extension may be actuated by moving the rod along the Z-axis.

**Embodiment 2** : With the same apparatus as shown in figure 6a, a rotation of the helicoid 101 can be converted into a translation of the rod 102 carrying the hyperboloid. In the embodiment, the apparatus is further equipped with a means for actuating the rotation of the helicoid around the Z-axis (e.g. by pushing the extension 104), while any translation of the helicoid along said axis wing/ns obstructed by the bracket 103.
In this embodiment, the role of input/output is inverted with respect to the previous embodiment 1 : when the helicoid 101 is actuated to rotate while held from translation by the bracket 103, then the unit carrying the hyperboloid, i.e. the rod 102, will translate along the Z-axis. Preferably, in embodiment 1 and 2, the rod is mounted in a sleeve which obstructs the rod from rotating around its longitudinal axis, or the rod has a non-circular cross-section and is mounted in holes with the same cross-section, thereby withholding the rod from rotating (as in fig. 6a).

The apparatus shown in figure 6b equally comprises a hyperboloid 200, arranged to interact without slip, with a helicoid 201. The hyperboloid is supported by another type of carrying device : the hyperboloid is able to rotate around its own axis, inside a casing 202, which is shown open to make the hyperboloid visible as shown in the drawing, but which is preferably closed around the whole of the hyperboloid. The casing is further arranged inside a stationary bracket 203, which is arranged around the helicoid 201. The bracket maintains the hyperboloid at a fixed position along the Z-axis. The apparatus of figure 6b can operate in a number of different ways, depending on the freedom of movement of the components. The apparatus is shown in an XYZ coordinate system, with the axis of the helicoid coinciding with the Z-axis.

**Embodiment 3 (fig. 6b) :** In this embodiment, the apparatus comprises a means for actuating the translation of the helicoid 201, while obstructing the rotation of said helicoid. At the same time, the casing 202 is mounted in such a way that it is able to rotate as a whole, along with the hyperboloid 200, around the Z-axis, while remaining stationary in the Z-direction, within the stationary bracket 203. The actuated translation of the helicoid 201 is thus converted into a precession angular rotation of the casing 202 carrying the hyperboloid.

**Embodiment 4 (fig. 6b) :** The translation of the helicoid is transformed into its own rotation. In this embodiment, the hyperboloid 200 is mounted on a fixed axis around which it can rotate freely. This is obtained by blocking the rotation (and translation) of the casing 202 inside bracket 203. The helicoid is mounted so that it can undergo a translation along the Z-axis and a rotation around the Z-axis. When the helicoid is translated along its longitudinal axis (the Z-direction), then the helicoid will start to rotate around its axis (the Z-axis) with the precession angular velocity. The axial force with which the helicoid is translated along its axis is thereby converted into a torque around the same axis.

It is to be noted that embodiments 1 to 4 make use of the tangential component of the normal reaction force between the hyperboloid and the helicoid, 'tangential' being defined with respect to the cylindrical envelope of the helicoid, i.e. not to the contacting surfaces. The normal reaction force is directed along the common normal of the surfaces into contact and has no moment around the axis of the hyperboloid. The moment of this reaction force around the axis of the helicoid allows one to convert forces along the axis of the helicoid into torques around this same axis and vice-versa. In these embodiments, the rotation of the hyperboloid around its own axis is not exploited as such, but used to obtain the rotation of another body (the casing 202 or the helicoid (101,201) itself.

In two further embodiments 5 and 6, it is the rotation of the hyperboloid around its own axis which is exploited, as an output or as an input to the system. In these cases, the movement is based on the friction force acting in the plane tangent between the helicoidal and the hyperboloid surfaces in contact. The power transmission will be limited by the amount of friction between the hyperboloid and the helicoid.

**Embodiment 5 (fig. 6b) :**
In the same set-up as in embodiment 4, a means is provided to actuate the translation of the helicoid along the Z-axis while the helicoid is free to rotate around said axis, or to actuate the rotation of the helicoid around the Z-axis while the helicoid is free to translate along said axis. Actuation of the helicoid to make it translate or rotate, will thus actuate the rotation of the hyperboloid 200 around its own (fixed) axis.
In this case, the torque around the hyperboloid axis comes from the friction force in the tangent plane between the surfaces in contact. This friction force is limited by the static friction force. The embodiment thus can be improved by putting teeth on both surfaces, aligned with the generatrix (the skew lines 1 and 10 of the ruled surfaces).

**Embodiment 6 (fig. 6b) :**
Still in the set-up of embodiment 4, the apparatus now comprises a means for actuating the rotation of the hyperboloid around its own axis, e.g. by an external motor coupled to the hyperboloid rotational axis. Once again, the casing is obstructed from rotation inside the stationary bracket 203. The rotation of the hyperboloid will then be converted into a screw motion of the helicoid. Again, the torque is obtained through the frictional forces, so this embodiment will also benefit from the application of teeth on the interacting surfaces.

It is clear that the optimal operation of these apparatuses will depend on the parameters of the hyperboloid and helicoid used. In the case of the apparatus of figure 6a, the rotation axis of the hyperboloid intersecting the Z-axis is obtained when $a_0 = do$. In the apparatus of figure 6b, do is negative, and a rotation axis of the hyperboloid orthogonal to the Z-axis is obtained when $a_0 = -d_0$.

## Applications based on embodiments 1 to 6

*Rotary actuator based on artificial muscles.*

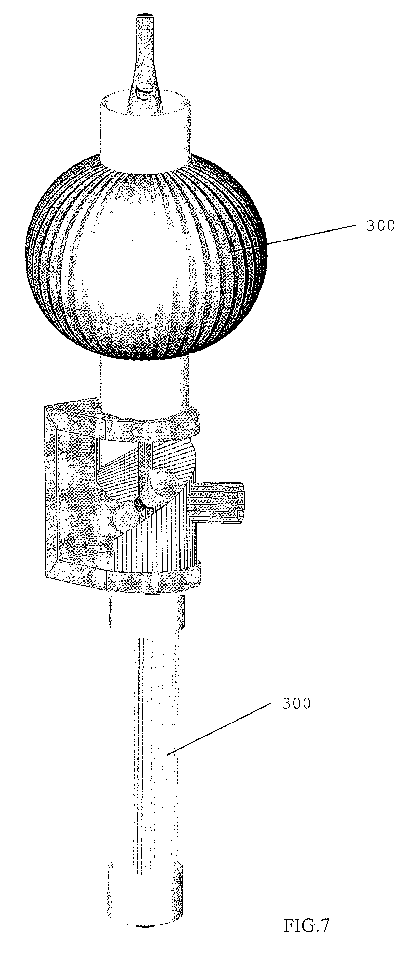

The embodiments 1, 3 and 4 can be used to convert the force from an artificial pneumatic muscle 300 into a torque, see figure 7. The high forces of the artificial muscles can be converted in a high torque. Such an apparatus can be used to power a joint of a robot where the swing of the rotating link is determined by the pitch of the helicoid. Advantages with respect to threaded ball screws are: low weight, high strength, small-size, low sensitivity to dirt.
Embodiment 4 can be used to create a tool which can exert a high torque or force at its end, by applying a force or a torque. If an impact force is applied to the helicoid for example, then an impact-like torque is generated on the same helicoid, which can be used for example to screw/unscrew fastening devices.

## Other applications

New type of lift for buildings :

A carriage for carrying loads is arranged to roll on a helicoidal surface, from one level to another. The wheels of the carriage have an outer ruled surface being a hyperboloid, i.e. they are obtained from cross-sections (perpendicular to the longitudinal axis) of a hyperboloid. The helicoid and hyperboloid are according to the invention. This way, the wheels can roll without slipping over the helicoidal surface.
Advantage : no cables, high level of safety, low cost.

## Manufacturing.

1.The hyperboloid roller.

The hyperboloid can be manufactured by milling followed by grinding, by letting the cutter of a milling machine follow the straight generatrix of the surface. The hyperboloid can also be obtained by turning where the cutting edge is programmed to follow the hyperbolic shape. The hyperboloid surface can be made from hard metals by electro-discharging technology with a straight edge electrode. Both teeth and cutting edges can be obtained by milling.

2. The helicoid.

The helicoid can be manufactured by metal cutting. The cutting tool must have the shape of the hyperboloid of the roller but has cutting edges aligned with a generatrix. This cutting tool can be made by metal cutting on a milling machine.

The helicoid can be made by electro-discharging technology. This allows one to make the ruled surface in hard metals.

The helicoid can be made by casting. The mould can be made with conventional techniques.

One-lead surfaces and blades can be obtained from a circular plate with a central bore. The plate must be cut along a radius, then one cutting edge must be moved with respect to the other edge and rotated as to obtain a conically shaped surface. Parts of the surface near the cutting edges will partially overlap. Finally one edge must be translated in the direction of the axis of the cone by an amount given by the lead of the screw.

**Claims**

1. An apparatus, comprising a first body with a ruled surface being a helicoid, and a second body with a ruled surface being a hyperboloid, **characterized in that** the hyperboloid is arranged to roll over the helicoid essentially without longitudinal slip and without lateral slip.

2. The apparatus according to claim 1, wherein said hyperboloid is defined by the rotation of a skew line (1) around an axis (2), with

   - $a_o$ being the distance along the binormal (3), i.e. the line perpendicular both to the axis and to the skew line, and
   - $\alpha_0$ the inclination angle of the skew line with respect to the axis' direction.

   and wherein said helicoid is defined by the rotation around an axis (11) and simultaneous translation along said axis of a skew line (10), with

   - $d_0$, being the distance measured along the binormal (12), i.e. the line perpendicular both to the axis and to the skew line,
   - $\beta_0$, being the angle between the skew line (10) and the plane perpendicular to the axis (11),
   - $\Omega_p$ being the precession angular velocity (in radians per second), of the skew line, with respect to the axis 11,
   - $V_z$ being the translation velocity of the skew line with respect to the axis 11 (in meter per second),

And wherein the following conditions are met :

$$\frac{a_0}{h} = \frac{\sin \alpha_0}{\cos \beta_0} \sqrt{1 + \frac{d_0^{\,2}}{h^2}} = \frac{\sin \alpha_0}{\cos^2 \beta_0}$$

   h being the pitch of the helicoid : $h = V_z/\Omega_p$

3. The apparatus according to claim 1 or 2, wherein said apparatus is arranged for transforming a linear to a rotary movement or vice versa.

4. The apparatus according to claim 3, wherein the hyperboloid body (100) is arranged to be rotatable around its own axis, while said axis is arranged in a fixed position with respect to a non-rotatable carrying device (102) carrying said hyperboloid body, while the helicoid body (101) is arranged to be rotatable around its longitudinal axis, said apparatus further comprising a means (103) for obstructing the translational movement of said helicoid body (101) along said longitudinal axis.

5. The apparatus according to claim 4, further comprising a means for actuating the translational movement of said carrying device (102), in the direction of said longitudinal axis, thereby causing the helicoid body (101) to rotate around said longitudinal axis.

6. The apparatus according to claim 4, further comprising a means for actuating the rotational movement of the helicoid body (101) around its longitudinal axis, thereby causing the translational movement of said carrying device (102) along said axis.

7. The apparatus according to any one of claims 4 to 6, wherein said carrying device is a rod (102), while said means for obstructing the translational movement the helicoid body is a U-shaped bracket (103).

8. The apparatus according to claim 3, wherein the hyperboloid body (200) is arranged to be rotatable around its own axis, while said axis is arranged in a fixed position with respect to a carrying device (202,203) carrying said hyperboloid body, while the helicoid body (201) is arranged to be translatable along its longitudinal axis.

9. The apparatus according to claim 8, wherein said carrying device (202) is arranged to be rotatable around the longitudinal axis of the helicoid body (201), and wherein said helicoid body is arranged to be translatable but not rotatable, further comprising a means for actuating the translation of the helicoid body along its longitudinal axis, thereby causing the carrying device (202) to rotate around said longitudinal axis.

10. The apparatus according to claim 8, wherein said carrying device (202) is arranged to be fixed with respect to the longitudinal axis of the helicoid body, and wherein said helicoid body (201) is arranged to be rotatable and translatable, further comprising a means for actuating the translation of the helicoid body along its longitudinal axis, thereby causing the helicoid body to rotate around said longitudinal axis.

11. The apparatus according to claim 8, wherein said carrying device (202,203) is arranged to be fixed with respect to the longitudinal axis of the helicoid body, and wherein said helicoid body (201) is arranged to be rotatable and translatable, further comprising a means for actuating the translation and/or rotation of the helicoid body along and/or around its longitudinal axis, thereby causing the hyperboloid body (200) to rotate around its own axis.

12. The apparatus according to claim 8, wherein said carrying device (202,203) is arranged to be fixed with respect to the longitudinal axis of the helicoid body, and further comprising a means for actuating the rotation of the hyperboloid body (200) around its own axis, thereby causing the rotation and translation of the helicoid body (201).

13. The apparatus according to any one of claims 8 to 12, wherein said carrying device comprises a casing (202) surrounding the hyperboloid (200), which is arranged to rotate around its axis inside said casing.

14. The apparatus according to claim 13, wherein said casing (202) is arranged inside a U-shaped bracket (203), arranged around the helicoid body.

15. The apparatus according to claim 5, 9 or 10, wherein said means for actuating the translational movement of the carrying device (102) or the means for actuating the translational movement of the helicoid body, comprise artificial muscles.

16. The apparatus according to claim 10, for screwing/unscrewing fastening devices, comprising a means for actuating the translation of the helicoid body by an impact force, thereby causing the rotation of said helicoid body.

17. A system for carrying loads, comprising a first body with a ruled surface being a helicoid, and a carriage, comprising wheels with a ruled surface being a hyperboloid, said carriage being able to roll over said first body without longitudinal slip and without lateral slip.

FIG. 1

FIG.2

FIG.3

FIG. 4

FIG.5

102

103

100

104

101

FIG.6a

201

203

200

202

FIG.6b

300

300

FIG.7

**European Patent Office**

## EUROPEAN SEARCH REPORT

Application Number

EP 05 44 7226

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 3 736 801 A (BLOOM R,US ET AL) 5 June 1973 (1973-06-05) * abstract * ----- | 1,3,12, 14,17 | F16H37/12 F16H25/22 |
| A | EP 0 733 828 A (STATE OF ISRAEL MINISTRY OF DEFENCE RAFAEL ARMAMENT DEVELOPMENT AUTHOR) 25 September 1996 (1996-09-25) * column 5, line 52 - column 6, line 29; figures 1,18 * ----- | 1-17 | |
| A | EP 0 213 318 A (MUELLER ARNOLD FA; MUELLER ARNOLD GMBH CO KG) 11 March 1987 (1987-03-11) * column 6, line 35 * ----- | 1-3,17 | |
| A | US 5 596 903 A (PARKER ET AL) 28 January 1997 (1997-01-28) * abstract * ----- | 1,3,4,17 | |
| A | GB 1 490 113 A (STANLEY R) 26 October 1977 (1977-10-26) * figures 1,4 * ----- | 1,3,4, 12,17 | TECHNICAL FIELDS SEARCHED (IPC) F16H |
| A | US 5 245 886 A (TRUESDELL ET AL) 21 September 1993 (1993-09-21) * abstract * ----- | 1,3,4,17 | |
| A | DE 32 38 334 A1 (BUCHENBERG,KONRAD) 19 April 1984 (1984-04-19) * page 10, line 5 - line 14; claim 1 * ----- | 1,4-14, 17 | |

The present search report has been drawn up for all claims

| Place of search | Date of completion of the search | Examiner |
|---|---|---|
| Munich | 16 December 2005 | Meyer, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 44 7226

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2005

| Patent document cited in search report | | Publication date | Patent family member(s) | | Publication date |
|---|---|---|---|---|---|
| US 3736801 | A | 05-06-1973 | NONE | | |
| EP 0733828 | A | 25-09-1996 | NONE | | |
| EP 0213318 | A | 11-03-1987 | DE 3531244 | A1 | 12-03-1987 |
| US 5596903 | A | 28-01-1997 | NONE | | |
| GB 1490113 | A | 26-10-1977 | AU 7743375 | A | 22-07-1976 |
| | | | BE 824558 | A1 | 15-05-1975 |
| | | | CA 1044045 | A1 | 12-12-1978 |
| | | | CH 596475 | A5 | 15-03-1978 |
| | | | DE 2502052 | A1 | 09-10-1975 |
| | | | FR 2329907 | A1 | 27-05-1977 |
| | | | IT 1026385 | B | 20-09-1978 |
| | | | JP 50128058 | A | 08-10-1975 |
| | | | JP 59163259 | U | 01-11-1984 |
| | | | LU 71677 | A1 | 24-06-1975 |
| | | | SE 405401 | B | 04-12-1978 |
| | | | SE 7500509 | A | 22-09-1975 |
| | | | US 3965761 | A | 29-06-1976 |
| | | | ZA 7500299 | A | 28-01-1976 |
| US 5245886 | A | 21-09-1993 | NONE | | |
| DE 3238334 | A1 | 19-04-1984 | CH 640615 | A5 | 13-01-1984 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 4282764 A

**Non-patent literature cited in the description**

• **HONG-SEN YAN et al.** Geometry design of roller gear cams with hyperboloid rollers. *Mathl. Comput. Modelling,* 1995, vol. 22 (8), 107-117